# EUROPÄISCHE PATENTSCHRIFT

(11) **EP 2 112 039 B1**
(45) Veröffentlichungstag und Bekanntmachung des Hinweises auf die Patenterteilung: **27.05.2015**
(21) Anmeldenummer: 09003892.8
(22) Anmeldetag: 18.03.2009
(51) Int. Cl.: B60S 1/08, G01N 21/45

(54) **Optische Sensorvorrichtung**
Optical sensor device
Dispositif de capteur optique

(30) Priorität: 22.04.2008 DE 102008020171
(43) Veröffentlichungstag der Anmeldung: 28.10.2009
(73) Patentinhaber: TRW Automotive Electronics & Components GmbH, 78315 Radolfzell (DE)
(72) Erfinder: Backes, Ulrich, Dr., 78315 Radolfzell (DE)
(74) Vertreter: Prinz & Partner mbB

(56) Entgegenhaltungen:
- EP-A2- 2 020 348
- EP-B1- 1 068 112
- DE-A1- 19 830 120
- GB-A- 2 179 484
- US-A1- 2007 235 638

## Beschreibung

Die Erfindung betrifft eine optische Sensorvorrichtung, die an eine Scheibe ankoppelbar ist, insbesondere an eine Windschutzscheibe eines Kraftfahrzeugs.

Solche Sensorvorrichtungen werden hauptsächlich als Regensensoren in Kraftfahrzeugen zur automatischen Betätigung der Scheibenwischer und als Lichtsensoren zur Steuerung der Fahrzeugbeleuchtung eingesetzt. Die Verwendung klassischer Linsen zur Beeinflussung des Strahlengangs, wie z.B. die gegen die Windschutzscheibe geneigten Linsen des in der EP 1 068 112 B1 gezeigten Regensensors, benötigen einen verhältnismäßig großen Bauraum.

Kleinere Bauformen sind, wie z.B. aus der WO 03/026937 A1 bekannt, durch Verwendung holographischer Strukturen möglich. Diese Sensoren basieren auf dem Prinzip der Lichtbeugung mit Hilfe von diffraktiven Elementen und haben daher den prinzipbedingten Nachteil einer wesentlich geringeren Nutzlichtausbeute und einer höheren Störlichtempfindlichkeit.

Die DE 196 08 648 C1 schlägt bei einer optischen Sensorvorrichtung vor, die Lichteintritts- bzw. -austrittsflächen der Lichtleitereinheit als Fresnellinsen auszubilden. Da jedoch die Flächen des Lichtleiters, in denen die Linsen ausgebildet sind, senkrecht zu der Fläche der Scheibe stehen, ist der erforderliche Bauraum dieser Vorrichtung sehr groß.

Aus der DE 198 30120 A1 ist eine optische Sensorvorrichtung mit den Merkmalen des Oberbegriffs des Anspruchs 1 bzw. des Anspruchs 2 bekannt. Die Sensorvorrichtung ist eine optoelektronische Regensensoreinrichtung mit einer Parallelisierungseinrichtung für ein emittiertes Strahlenbündel und einer Fokussierungseinrichtung. Die Parallelisierungseinrichtung und die Fokussierungseinrichtung sind jeweils als segmentierte Linse ausgebildet. Die beiden Linsen sind nebeneinander in einer zur inneren Oberfläche der Scheibe parallelen Ebene liegend angeordnet. Die einzelnen Segmente der segmentierten Linsen bestehen aus prismatischen Körpern mit unterschiedlichen Grundflächen, deren Hochachsen jeweils parallel zur Achse des Senderstrahlenbündels bzw. zur Achse des Empfängerlichtbündels sind. Die Oberflächen der Segmente sind so geformt, dass die Strahlen in der Scheibe als parallele Strahlenbündel verlaufen.

Die GB 2 179 484 A zeigt eine Flüssigkristall-Videoprojektionsanzeigevorrichtung, bei der eine Fresnellinse auf der Austrittsseite einer Flüssigkristall-Anzeigetafel angeordnet ist, um das Bild in Richtung gegen eine Projektionslinse zu fokussieren. Die Fresnellinse hat ein nicht-symmetrisches Muster, das so ausgebildet ist, dass Licht, welches durch die Anzeigetafel hindurchtritt, wirksam in einem schrägen Winkel gesammelt wird, der mit einem Umorientierungswinkel der Flüssigkeitskristallmoleküle übereinstimmt. Auf der Lichteinfallseite der Anzeigetafel sind zusätzliche optische Elemente vorgesehen, die eine weitere nicht-symmetrische Fresnellinse umfassen, welche das Licht in einem schrägen Winkel kollimiert.

Die nachveröffentlichte europäische Patentanmeldung EP 2 020 348 A2 zeigt eine optische Sensorvorrichtung mit den Merkmalen des Oberbegriffs des Anspruchs 1.

Die grundsätzlichen Nachteile bekannter optischer Regen- bzw. Tageslichtsensorvorrichtungen sind im hohen Herstellungsaufwand und im schlechten Verhältnis der Sensorabmessungen zur Größe der benutzungsempfindlichen Fläche zu sehen.

Die Erfindung schafft eine optische Sensorvorrichtung, die bei optimalen optischen Verhältnissen mit einem sehr geringen Bauraum auskommt und eine möglichst geringe Vorfeldobjekt- und Fremdlichtempfindlichkeit aufweist.

Hierzu ist bei einer ersten Ausführung der optischen Sensorvorrichtung eine Sensoreinheit vorgesehen, die einen Lichtsender, einen Lichtempfänger und eine Linsenplatte aufweist, mit der ein vom Lichtsender ausgestrahltes Lichtbündel in die Scheibe eingekoppelt, aus der Scheibe ausgekoppelt und auf den Lichtempfänger gelenkt wird. Die Linsenplatte weist auf einer dem Lichtsender und dem Lichtempfänger zugewandten ersten Fläche eine kombinierte Fresnelstruktur mit einer Fresnel-Linsenstruktur und einer Fresnel-Reflektorstruktur und auf einer gegenüberliegenden, der Scheibe zugewandten zweiten Fläche eine Fresnel-Reflektorstruktur auf. Diese Ausführung eignet sich besonders als Regensensor.

In diesem Fall hat die Sensoreinheit in der Linsenplatte einander benachbart zwei getrennte kombinierte Fresnelstrukturen mit gegenüberliegenden Fresnel-Reflektorstrukturen. Im Brennpunkt der einen Fresnel-Linsenstruktur ist der Lichtsender und im Brennpunkt der anderen Fresnel-Linsenstruktur der Lichtempfänger angeordnet. Das vom Lichtsender ausgehende Lichtbündel wird durch die eine kombinierte Fresnelstruktur parallel gerichtet, durchquert die Linsenplatte senkrecht, wird durch die entsprechende Fresnel-Reflektorstruktur schräg gegen die Scheibe gerichtet und von der Scheibe totalreflektiert und sodann durch die zu der anderen kombinierten Fresnelstruktur gehörende Fresnel-Reflektorstruktur in die Linsenplatte eingekoppelt und senkrecht durch die Linsenplatte auf die andere kombinierte Fresnelstruktur gerichtet sowie durch diese auf dem Lichtempfänger gebündelt. Da alle optisch aktiven Elemente in der Linsenplatte konzentriert sind, ergibt sich ein minimaler Bauraum. Zugleich wird eine große nutzbare Sensorfläche auf der Scheibe erreicht.

In einer zweiten Ausführung der optischen Sensorvorrichtung ist eine Sensoreinheit vorgesehen, die einen Lichtempfänger und eine Linsenplatte aufweist, mit der ein auf der Scheibe auftreffendes Lichtbündel aus der Scheibe ausgekoppelt und auf den Lichtempfänger gelenkt wird. Die Linsenplatte weist auf einer dem Lichtempfänger zugewandten ersten Fläche eine kombinierte Fresnelstruktur mit einer Fresnel-Linsenstruktur und einer Fresnel-Reflektorstruktur und auf einer gegenüberliegenden, der Scheibe zugewandten zweiten Fläche eine Fresnel-Reflektorstruktur auf. Diese Ausführung eignet sich besonders als Lichtsensor.

In diesem Fall durchquert ein parallel auf die Scheibe treffendes Lichtbündel diese schräg und wird sodann durch die Fresnel-Reflektorstruktur in die Linsenplatte eingekoppelt und senkrecht durch die Linsenplatte auf die kombinierte Fresnelstruktur gerichtet sowie durch diese auf dem Lichtempfänger gebündelt. Auch hier sind alle optisch aktiven Elemente in der Linsenplatte konzentriert, so daß sich ein minimaler Bauraum ergibt. Zugleich wird eine ausgezeichnete Richtwirkung für das zu detektierende Licht erreicht.

In einer vorteilhaften Ausführungsform eines Regen/Licht-Sensors sind beide Ausführungen der optischen Sensorvorrichtung kombiniert und teilen sich eine gemeinsame Linsenplatte, in der alle kombinierten Fresnelstrukturen und Fresnel-Reflektorstrukturen ausgebildet sind.

Weitere vorteilhafte und zweckmäßige Ausgestaltungen der erfindungsgemäßen optischen Sensorvorrichtung ergeben sich aus den Unteransprüchen.

Die Erfindung wird nachfolgend anhand bevorzugter Ausführungsformen unter Bezugnahme auf die beigefügten Zeichnungen näher erläutert. In den Zeichnungen zeigen schematisch:
- Figur 1 eine schematische Schnittansicht einer Sensoreinheit eines Regensensors;
- Figur 1a eine Detailvergrößerung der unteren Fresnelstruktur aus Figur 1;
- Figur 2 eine vergrößerte Querschnittsansicht einer Fresnel-Reflektorstruktur;
- Figuren 3a bis 3c entsprechende Querschnittsansichten verschiedener Ausführungsformen;
- Figur 4 eine schematische Schnittansicht der Lichtsenderseite einer besonderen Ausführungsform einer Sensoreinheit eines Regensensors;
- Figur 5 eine schematische Schnittansicht eines Tageslichtsensors.

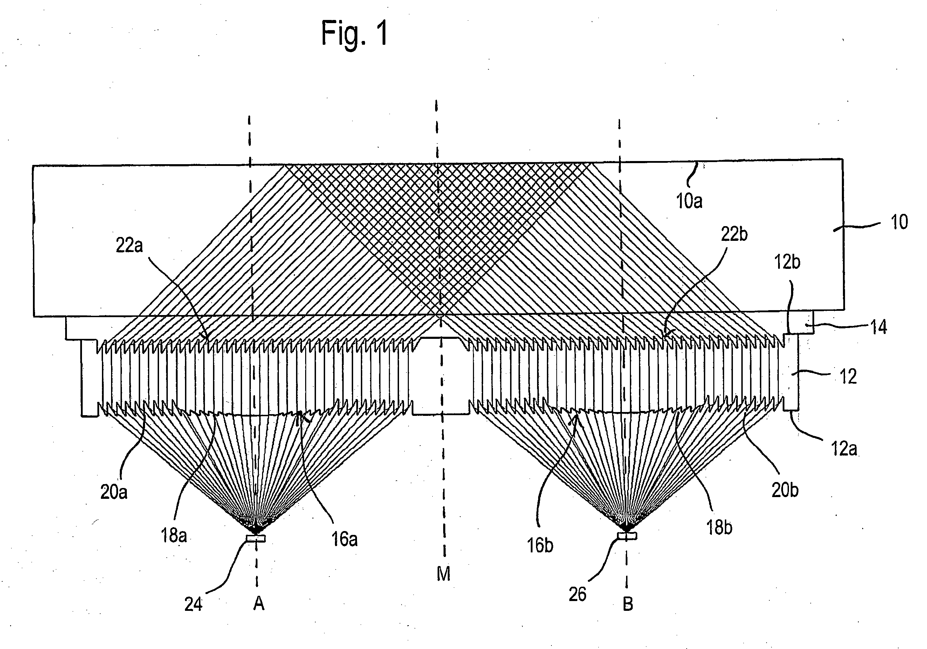

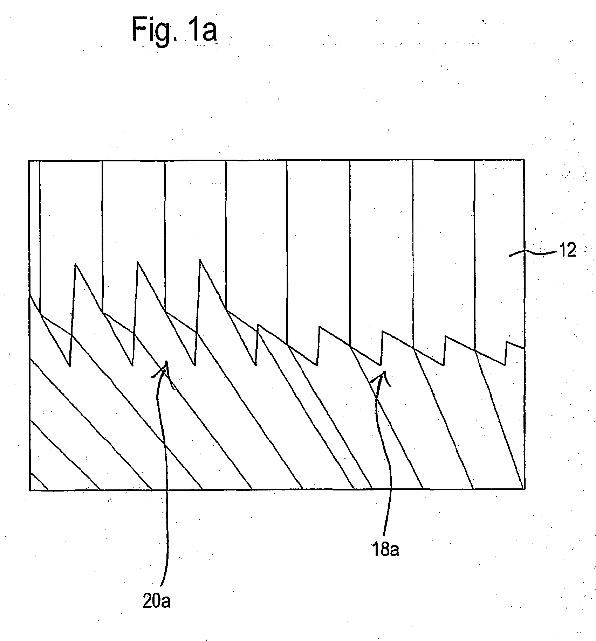

Ein Regensensor besteht typischerweise aus zwei gleichen optischen Sensoreinheiten. Eine solche Sensoreinheit ist in Figur 1 schematisch dargestellt. Die Sensoreinheit wird an der Windschutzscheibe 10 eines Kraftfahrzeugs angebracht. Das optisch aktive Element der Sensoreinheit ist eine Linsenplatte 12. Die Linsenplatte 12 ist an die Windschutzscheibe 10 mittels einer Kopplerschicht 14 optisch angekoppelt.

Auf einer von der Windschutzscheibe 10 abgewandten ersten Fläche 12a ist die Linsenplatte 12 mit zwei gleichen Fresnelstrukturen 16a, 16b versehen, die einen geringen Abstand voneinander haben. Beide Fresnelstrukturen 16a, 16b sind bezüglich einer Achse A bzw. B rotationssymmetrisch ausgebildet. Die Fresnelstrukturen 16a, 16b können in einen inneren Teil und einen äußeren Teil, der einen größeren radialen Abstand von der Achse A bzw. B als der innere Teil hat, unterteilt werden. Der innere Teil stellt eine Fresnel-Linsenstruktur 18a bzw. 18b, der äußere Teil eine Fresnel-Reflektorstruktur 20a bzw. 20b dar. Im folgenden werden die Fresnelstrukturen auf der von der Windschutzscheibe 10 abgewandten ersten Fläche 12a der Linsenplatte 12 deshalb als kombinierte Fresnelstrukturen 16a, 16b bezeichnet.

Wie insbesondere in der Detailvergrößerung der Figur 1a zu erkennen ist, haben sowohl die Fresnel-Linsenstruktur 18a bzw. 18b als auch die Fresnel-Reflektorstruktur 20a bzw. 20b ein sägezahnartiges Profil, wobei die der Achse A bzw. B zugewandten Flanken der Fresnel-Reflektorstruktur 20a bzw. 20b steiler und länger als die entsprechenden Flanken der Fresnel-Linsenstruktur 18a bzw. 18b sind.

Auf einer der Windschutzscheibe 10 zugewandten zweiten Fläche 12b ist die Linsenplatte 12 in Gegenüberlage zu den kombinierten Fresnelstrukturen 16a, 16b mit zwei bezüglich der Mittelebene M der Linsenplatte 12 spiegelsymmetrischen Fresnel-Reflektorstrukturen 22a, 22b versehen. Ähnlich wie die Fresnel-Reflektorstrukturen 20a, 20b der ersten Fläche 12a bestehen auch die Fresnel-Reflektorstrukturen 22a, 22b der zweiten Fläche 12b aus feinen Oberflächengestaltungen, die abwechselnd erhaben und vertieft sind.

Im Brennpunkt der Fresnel-Linsenstruktur der 18a, der auf der zugehörigen Rotationssymmetrieachse A liegt, befindet sich ein Lichtsender 24. Im Brennpunkt der Fresnel-Linsenstruktur 18b, der auf der zugehörigen Rotationssymmetrieachse B liegt, befindet sich ein Lichtempfänger 26.

Der Lichtsender 24 strahlt Licht in einem bestimmten Frequenzbereich aus, wobei der Begriff "Licht" nicht auf sichtbares Licht beschränkt ist, sondern insbesondere Strahlung im Infrarotbereich sein kann. Das vom Lichtsender 24 ausgehende divergierende Lichtbündel wird durch die kombinierte Fresnelstruktur 16a zu parallelem Licht umgeformt, das die Linsenplatte 12 senkrecht durchquert. Die kombinierte Fresnelstruktur 16a ist dabei so ausgelegt, daß diejenigen Strahlen des Lichtbündels, die auf die Fresnel-Linsenstruktur 18a treffen, nur gebrochen werden, während diejenigen Strahlen des Lichtbündels, die auf die Fresnel-Reflektorstruktur 20a treffen, gebrochen und reflektiert werden (siehe Figuren 1 und 1a). Im Ergebnis erhalten alle Strahlen die gleiche Richtung, so daß insgesamt ein paralleles Lichtbündel entsteht.

Wie anhand von Figur 1a nachvollziehbar hängt die (radiale) Position der Grenze zwischen der Fresnel-Linsenstruktur 18a bzw. 18b und der Fresnel-Reflektorstruktur 20a bzw. 20b vom Einfallswinkel der Lichtstrahlen des Lichtbündels vom Lichtsender 24 auf die gemäß der Darstellung in Figur 1a rechten Flanken der Fresnel-Linsenstruktur 18a ab, an denen die Lichtstrahlen gebrochen werden. Die Neigung dieser Flanken ist dahingehend vorgegeben, daß die gebrochenen Strahlen senkrecht durch die Linsenplatte 12 verlaufen sollen. Mit größer werdendem radialen Abstand von der Achse A wird der Einfallswinkel dadurch bedingt immer kleiner. An der Stelle, an der der Einfallswinkel einen festgelegten Wert unterschreiten würde (die Lichtstrahlen also zu flach auf die Flanken einfallen würden), befindet sich ein sinnvoller Übergang zur Fresnel-Reflektorstruktur 20a.

Nach Durchqueren der Linsenplatte 12 wird das parallele Lichtbündel durch die Fresnel-Reflektorstruktur 22a schräg zur Ebene der Linsenplatte 12 reflektiert und tritt in die Kopplerschicht 14 ein. Nach Durchqueren der Kopplerschicht 14 tritt das Lichtbündel in die Windschutzscheibe 10 ein und wird an deren gegenüberliegenden Innenfläche 10a totalreflektiert. Es durchquert dann erneut die Windschutzscheibe 10, tritt in die Kopplerschicht 14 ein und wird durch die Fresnel-Reflektorstruktur 22b umgelenkt, so daß es die Linsenplatte 12 senkrecht durchquert. Die kombinierte Fresnelstruktur 16b transformiert schließlich das parallele Lichtbündel in ein konvergierendes Lichtbündel, das auf den Lichtempfänger 26 trifft.

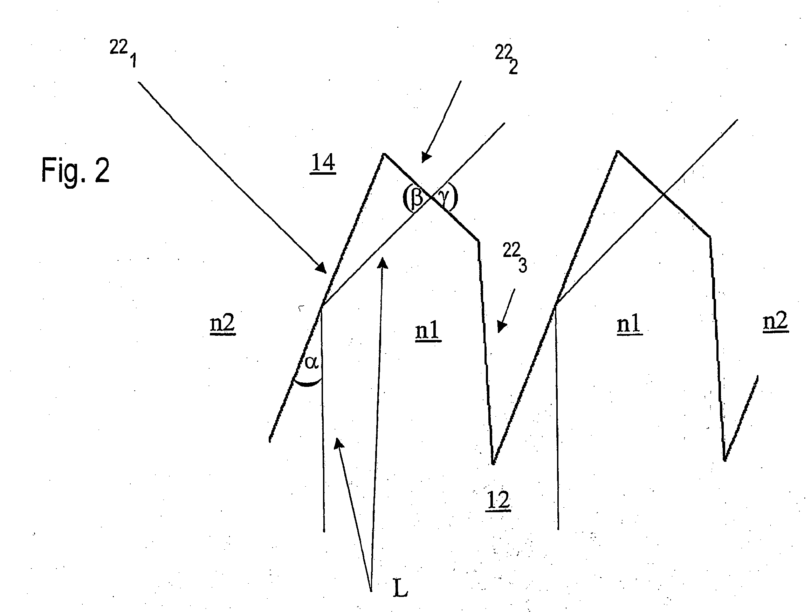

Die Fresnel-Reflektorstrukturen 22a, 22b weisen einige Besonderheiten auf, die nun anhand der Figur 2 erläutert werden. Die Oberflächengestaltungen der Fresnel-Reflektorstrukturen 22a, 22b sind im Querschnitt allgemein sägezahnförmig und bilden eine Vielzahl von prismenartigen Abschnitten. Eine erste Flanke 22₁ erstreckt sich durchgehend gerade vom Grund bis zum Scheitel; eine zweite Flanke besteht aus zwei Abschnitten 22₂ und 22₃. Der Abschnitt 22₂ der zweiten Flanke (rechts in Fig. 2) ist weniger steil als der zweite Abschnitt 22₃, der auch steiler ist als die Flanke 22₁.

Die Brechungsindizes n1 und n2 der Materialien, aus denen die Linsenplatte 12 bzw. die Kopplerschicht 14 bestehen, sind sorgfältig aufeinander abgestimmt, ebenso wie die Winkel an den Flanken der sägezahnförmigen Reflektorstrukturen 22a, 22b. Ein Lichtstrahl L, der die Linsenplatte 12 senkrecht durchquert, trifft unter einem spitzen Winkel α auf die Flanke 22₁, wird totalreflektiert und trifft unter einem Winkel β auf die Flanke 22₂. Bei der in Figur 2 gezeigten Ausführung ist der Winkel β gleich 90°, so daß auch der Austrittswinkel γ 90° beträgt. An der Flanke 22₂ tritt also keine Lichtbrechung auf.

Die Brechungsindizes n1 und n2 unterscheiden sich nur wenig voneinander. Bedingung für die Totalreflexion des Lichtstrahls an der Flanke 22₁ ist, daß der Einfallswinkel größer ist als der Arcussinus des Verhältnisses der Brechungsindizes. Da das Verhältnis der Brechungsindizes nur wenig von 1 verschieden ist, muß der Einfallswinkel α relativ flach sein. Beispielsweise ergibt sich für die Materialpaarung Polycarbonat für die Linsenplatte 12 und Silikongummi für die Kopplerschicht 14 ein maximaler Einfallswinkel α von etwa 26°. Dieser Winkel bestimmt die minimale Steilheit der Reflektorstruktur. Die tatsächliche Steilheit wird dadurch bestimmt, daß der in Richtung der Windschutzscheibe 10 austretende Lichtstrahl den für die Totalreflexion an der Scheibe notwendigen Winkel aufweist. Der für die Totalreflexion an der Windschutzscheibe 10 erwünschte Eintrittswinkel beträgt typischerweise etwa 45°. Dieser Winkel ist mit den Forderungen an die Geometrie der Fresnel-Reflektorstrukturen 22a, 22b kompatibel.

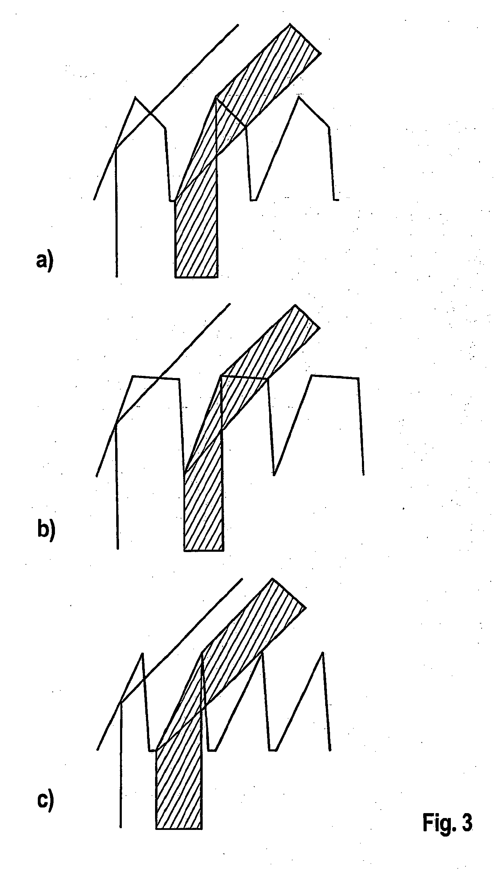

Figur 3a zeigt nochmals schematisch die mit der in Figur 2 dargestellten Geometrie der Fresnel-Reflektorstrukturen 22a, 22b erzielbare Lichtführung. An der Grenzschicht zwischen Linsenplatte 12 und Kopplerschicht 14 tritt keine Lichtbrechung auf. Die Konsequenz ist eine nicht optimale Ausleuchtung der durch die totalreflektierende Fläche der Windschutzscheibe 10 gebildeten Sensorfläche.

Noch ungünstiger sind die Verhältnisse in Figur 3b. Dort ist der Abschnitt 22₂ an der rechten Flanke der Sägezahnstruktur noch flacher. Da die Lichtstrahlen unter einem von 90° verschiedenen Winkel auf der Flanke 22₂ auftreffen, tritt eine Lichtbrechung in mathematisch negativer Richtung (nach rechts in Figur 3b) auf. Die austretenden Lichtbündel sind noch schmäler als in Figur 3a.

Optimal sind die Ausleuchtungsverhältnisse bei der in Figur 3c gezeigten Geometrie. Die in der Figur rechte Flanke der Sägezahnstruktur ist hier ungeteilt durchgehend und steiler gestellt als die linke Flanke. An der rechten Flanke erfolgt eine Lichtbrechung im mathematisch positiven Sinne (nach links in Figur 3c). Der Auftreffwinkel für den Lichtstrahl auf der linken Flanke ist mit der Bedingung für Totalreflexion noch vereinbar. Das an der rechten Flanke gebrochene Lichtbündel berührt gerade den Scheitel einer benachbarten Sägezahnstruktur. Dies ergibt eine lückenlose Ausleuchtung der Sensorfläche an der Windschutzscheibe 10.

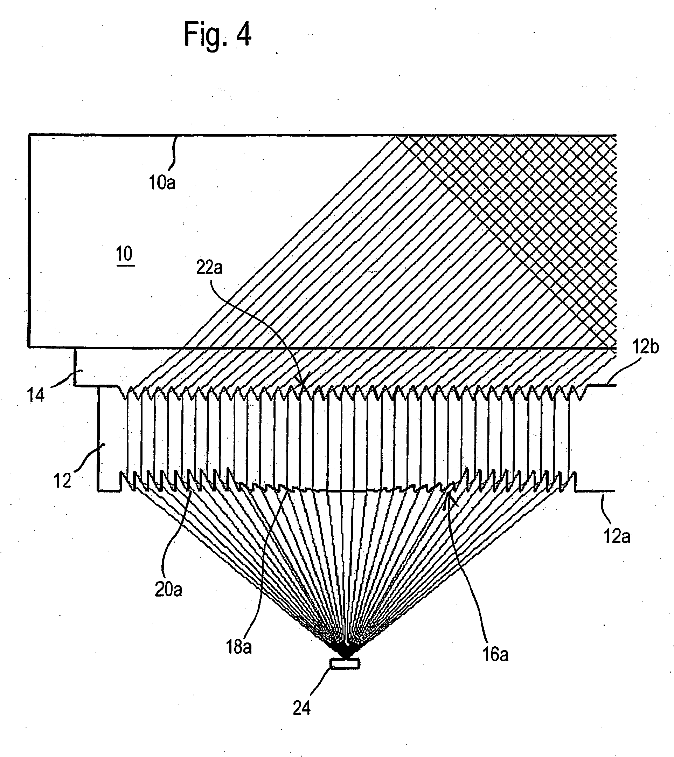

Gemäß einem anderen Ansatz wird das zuletzt erläuterte Prinzip der möglichst lückenlosen Ausleuchtung der Sensorfläche teilweise zugunsten einer verbesserten Fremdlichtunterdrückung aufgegeben. Es ist nämlich zu berücksichtigen, daß von außerhalb der Windschutzscheibe 10 einwirkendes Fremdlicht (z. B. Sonnenlicht) ebenfalls auf den Lichtempfänger 26 treffen kann. Versuche und Simulationen haben gezeigt, daß innerhalb der oben erläuterten Rahmenbedingungen eine im wesentlichen symmetrische Gestaltung der Sägezahnstruktur zu einer bestmöglichen Fremdlichtunempfindlichkeit führt. Eine gemäß diesem Ansatz ausgebildete Ausführungsform ist in Figur 4 gezeigt.

Unter einer symmetrischen Gestaltung ist hierbei zu verstehen, daß die linken und die rechten Flanken gerade (ohne Unterteilung) sind und bezüglich der Ebene der Windschutzscheibe 10 oder der Linsenplatte 12 im wesentlichen die gleiche Neigung haben. Außerdem soll die "im wesentlichen" symmetrische Gestaltung der Sägezahnstruktur Abweichungen innerhalb eines üblichen Toleranzbereichs und die Berücksichtigung der Unterschiede in den Brechungsindizes der Linsenplatte 12 und der Kopplerschicht 14 explizit mit einbeziehen.

Für die einwandfreie Funktion der beschriebenen Ausführungen der Fresnel-Reflektorstrukturen 22a, 22b ist es notwendig, daß das Material der Kopplerschicht 14 formschlüssig und ohne Einschluß von Luftblasen oder dergleichen an der Fläche der Reflektorstrukturen 22a, 22b anliegt.

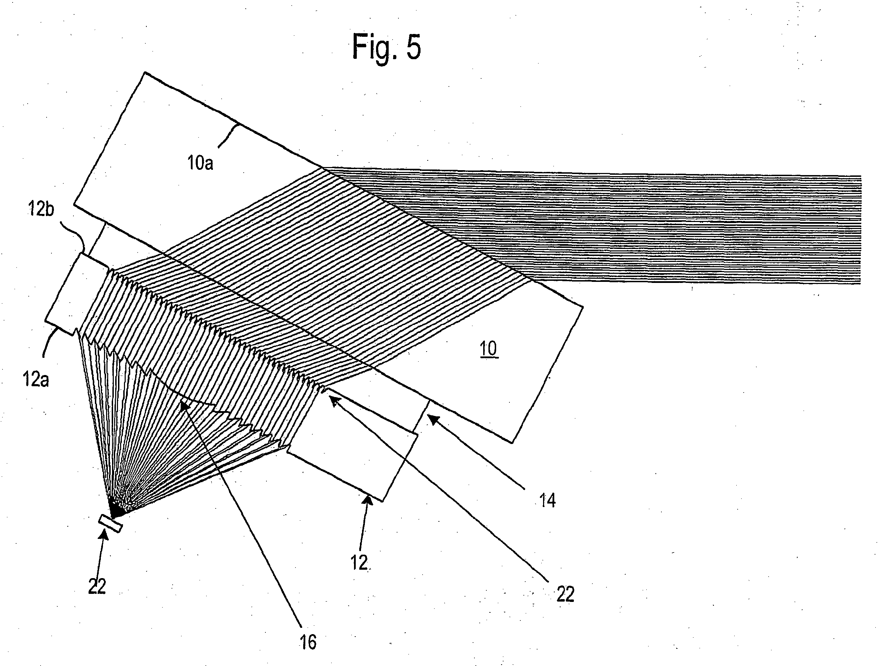

Die in Figur 5 gezeigte Ausführung einer optischen Sensorvorrichtung ist ein richtungsempfindlicher Tageslichtsensor. Die gezeigte Sensoreinheit hat als optisches Element wiederum eine Linsenplatte 12, die in diesem Fall nur eine kombinierte Fresnelstruktur 16 und in Gegenüberlage dazu eine entsprechende Fresnel-Reflektorstruktur 22 aufweist. Die kombinierte Fresnelstruktur 16 ist wie bei den in den Figuren 1 und 4 gezeigten Regensensorvorrichtungen aufgebaut und weist dementsprechend eine (innere) Fresnel-Linsenstruktur und eine (äußere) Fresnel-Reflektorstruktur auf, obwohl in Figur 5 der Einfachheit halber nur eine Fresnel-Linsenstruktur gezeigt ist.

Der Lichtempfänger 26 ist im Brennpunkt der Fresnel-Linsenstruktur plaziert. Die Linsenplatte 12 ist mittels der Kopplerschicht 14 an die Windschutzscheibe 10 angekoppelt, deren Neigungswinkel in dem gezeigten Ausführungsbeispiel etwa 27° beträgt. Für die Geometrie der Fresnel-Reflektorstruktur 22 gelten dieselben Kriterien wie bei den zuvor beschriebenen Ausführungsformen, die einen Regensensor betreffen.

Der Tageslichtsensor ist empfindlich für horizontal auf die Windschutzscheibe 10 auftreffendes Licht, das beim Auftreffen auf der Scheibe schräg nach unten gebrochen wird und durch die Kopplerschicht 14 auf die Fresnel-Reflektorstruktur 22 trifft, welche die Lichtstrahlen umlenkt und senkrecht durch die Linsenplatte 12 auf die kombinierte Fresnelstruktur 16 richtet, die das Licht auf den Lichtempfänger 26 bündelt.

In der Praxis werden kombinierte Regen/Licht-Sensoren benötigt. Der Regensensor enthält eine Anzahl von Sensoreinheiten der in Figur 1 oder Figur 4 gezeigten Art.

Die Sensoreinheiten sind einander benachbart angeordnet und teilen sich eine gemeinsame Linsenplatte 12. In derselben Linsenplatte 12 sind auch die optisch aktiven Strukturen des in Figur 5 gezeigten Tageslichtsensors angeordnet. Bei Bedarf werden weitere Sensoren vorgesehen, die Licht aus verschiedenen Richtungen empfangen können. Ungerichtetes Umgebungslicht kann zusätzlich durch einen optisch nicht oder nur wenig aktiven Bereich der Linsenplatte 12 hindurch detektiert werden.

Die Herstellung der Linsenplatte 12 kann in herkömmlicher Spritzgußtechnik erfolgen. Alternativ kommt eine Prägetechnik zum Einsatz.

Zur Vermeidung einer Fehlfunktion durch unerwünschte Lichtein- und/oder - auskopplung, deren mögliche Ursachen nachfolgend noch genauer erläutert werden, ist wenigstens ein Teil der optisch nicht aktiven Flächen der Linsenplatte 12 mit Brechungs- oder Reflexionsstrukturen, z. B. Retroreflektorelementen (sog. "Katzenaugen"), versehen. Dadurch wird Licht, das nicht an den optisch aktiven Flächen auftrifft, in "unschädliche" Richtungen umgelenkt. Alternativ kann der optisch nicht aktive Bereich auf einer oder beiden Seiten mit einer lichtundurchlässigen Bedruckung versehen werden. Grundsätzlich besteht nämlich die Möglichkeit, daß neben dem erwünschten parallelen, zur Ausleuchtung der Windschutzscheibe 10 unter 45° benutzten Lichtbündel weitere, unerwünschte Lichtstrahlen Gegenstände wie z. B. Sandkörner beleuchten, die sich vor der Vorderfläche der Windschutzscheibe 10 befinden und damit keine Benetzung darstellen. Von diesen Gegenständen wiederum kann ein Teil der Lichtstrahlen reflektiert werden und so unter Umständen in den Lichtempfänger 26 gelangen. Des weiteren kann, wie zuvor bereits erwähnt, von außen einwirkendes Fremdlicht (z. B. Sonnenlicht) auf den Lichtempfänger 26 treffen. Ebenso kann unter Umständen Licht vom Lichtsender 24 durch Mehrfachreflexion direkt (d. h. ohne "Umweg" durch die Windschutzscheibe 10) zum Lichtempfänger 26 gelangen. Alle diese Effekte können zu einer Fehlerkennung von Benetzung führen.

## Patentansprüche

1. Optische Sensorvorrichtung, die an eine Scheibe ankoppelbar ist, insbesondere an eine Windschutzscheibe (10) eines Kraftfahrzeugs, mit einer Sensoreinheit, die einen Lichtsender (24), einen Lichtempfänger (26) und eine Linsenplatte (12) aufweist, mit der ein vom Lichtsender (24) ausgestrahtles Lichtbündel in die Scheibe eingekoppelt, aus der Scheibe ausgekoppelt und auf den Lichtempfänger (26) gelenkt wird, **dadurch gekennzeichnet, daß** die. Linsenplatte (12) auf einer dem Lichtsender (24) und dem Lichtempfänger (26) zugewandten ersten Fläche (12a) eine kombinierte Fresnelstruktur (16a, 16b) mit einer Fresnel-Linsenstruktur (18a, 18b) und einer Fresnel-Reflektorstruktur (20a, 20b) und auf einer gegenüberliegenden, der Scheibe zugewandten zweiten Fläche (12b) eine Fresnel-Reflektorstruktur (22a, 22b) aufweist.

2. Optische Sensorvörrichtung, die an eine Scheibe ankoppelbar ist, insbesondere an eine Windschutzscheibe 10) eines Kraftfahrzeugs, mit einer Sensoreinheit, die einen Lichtempfänger (26) und eine Linsänplatte (12) aufweist, mit, der ein auf der Scheibe auftreffendes Lichtbündel aus der Scheibe ausgekoppelt und auf den Lichtempfänger (26) gelenkt wird, **dadurch gekennzeichnet, daß** die Linsenplatte (12) auf einer dem Lichtempfänger (26) zugewandten ersten Fläche, (12a) eine kombinierte Fresnelstruktur (16) mit einer Fresnel-Linsenstruktur und einer Fresnel-Reflektorstruktur und auf einer gegenüberliegenden, der Scheibe zugewandten zweiten Fläche (12b) eine Fresnel-Reflektorstruktur (22) aufweist.

3. Optische Sensorvorrichtung nach Anspruch 1, **dadurch gekennzeichnet, daß** die kombinierte Fresnelstruktur (16a) der ersten Fläche (12a) ein divergierendes Lichtbündel zu einem parallelem Lichtbündel umformt.

4. Optische Sensorvorrichtung nach einem der vorhergehenden Ansprüche, **dadurch gekennzeichnet, daß** die kombinierte Fresnelstruktur (16a, 16b; 16) der ersten Fläche (12a) ein aus der Scheibe ausgekoppeltes, die Linsenplatte (12) durchquerendes paralleles Lichtbündel in ein konvergierendes Lichtbündel umformt.

5. Optische Sensorvorrichtung nach Anspruch 3 oder 4, **dadurch gekennzeichnet, daß** das parallele Lichtbündel die Linsenplatte (12) senkrecht durchquert.

6. Optische Sensorvorrichtung nach einem der vorhergehenden Ansprüche, **dadurch gekennzeichnet, daß** die kombinierte Fresnelstruktur (16a, 16b; 16) der ersten Fläche eine rotätionssymmetrische Struktur zur Bündelung eines divergierenden oder parallelen Lichtbündels ist.

7. Optische Sensorvorrichtung nach Anspruch 6, **dadurch gekennzeichnet, daß** die Fresnel-Reflektorstruktur (20a, 20b) der kombinierten Fresnelstruktur (16a, 16b; 16) einen größeren radialen Abstand von der Rotationssymmetrieachse (A, B) als die Fresnel-Linsenstruktur (18a, 18b) der kombinierten Fresnelstruktur (16a, 16b; 16) hat.

8. Optische Sensorvorrichtung nach einem der vorhergehenden Ansprüche, **dadurch gekennzeichnet, daß** die Fresnel-Reflektorstruktur (22a, 22b; 22) der zweiten Fläche (12b) eine lineare Struktur zur Umlenkung eines parallelen Lichtbündels in eine bestimmte Richtung ist.

9. Optische Sensorvorrichtung nach einem der vorhergehenden Ansprüche, **dadurch gekennzeichnet, daß** die Linsenplatte (12) durch eine formschlüssig an der Fresnel-Reflektorstruktur (22a, 22b; 22) der zweiten Fläche (12b) anliegende Kopplerschicht (14) an die Scheibe angekoppelt ist.

10. Optische Sensorvorrichtung nach einem der einem der vorhergehenden Ansprüche, **dadurch gekennzeichnet, daß** die Fresnel-Reflektorstruktür (22a, 22b; 22) der zweiten Fläche (12b) an Innenflächen reflektiert.

11. Optische Sensorvorrichtung nach einem der vorhergehenden Ansprüche, **dadurch gekennzeichnet, daß** die Fresnel-Reflektorstruktur (22a, 22b; 22) der zweiten Fläche (12b) im Querschnitt allgemein sägezahnförmig ist, mit ersten Flanken (22₁), an denen die Reflexion auftritt, und zweiten Flanken (22₂, 22₃), an denen ein paralleles Lichtbündel ein- oder austritt.

12. Optische Sensorvorrichtung nach Anspruch 11, **dadurch gekennzeichnet, daß** die zweiten Flanken (22₂, 22₃) senkrecht durchquert werden.

13. Optische Sensorvorrichtung nach Anspruch 11, **dadurch gekennzeichnet, daß** an den zweiten Flanken (22₂, 22₃) eine Lichtbrechung erfolgt.

14. Optische Sensorvorrichtung nach Anspruch 12 oder 13, **dadurch gekennzeichnet, daß** die zweiten Flanken zwei verschieden steile Abschnitte (22₂, 22₃) aufweisen, von denen die weniger steilen (22₂) die Ein- bzw. Austrittsflächen bilden.

15. Optische Sensorvorrichtung nach Anspruch 13, **dadurch gekennzeichnet, daß** die zweiten Flanken (22₂, 22₃) Ein- bzw. Austrittsflächen bilden, die steiler sind als die erste Flanken.

16. Optische Sensorvorrichtung nach einem der Ansprüche 11 bis 13, **dadurch gekennzeichnet, daß** die ersten und die zweiten Flanken (22₁ bzw. 22₂, 22₃) im wesentlichen symmetrisch zueinander ausgeführt sind.

17. Optische Sensorvorrichtung nach Anspruch 1 und einem der Ansprüche 3 bis 16, **gekennzeichnet durch** wenigstens eine Sensoreinheit, für die in der Linsenplatte (12) einander benachbart zwei getrennte kombinierte Fresnelstrukturen (16a, 16b), die eine Fresnel-Linsenstruktur (18a, 18b) und eine Fresnel-Reflektorsfruktur (20a, 20b) aufweisen, mit gegenüberliegenden Fresnel-Reflektorstrukturen (22a, 22b) gebildet sind und im Brennpunkt der einen Fresnel-Linsenstruktur (18a) der Lichtsender (24) sowie im Brennpunkt der anderen Fresnel-Linsenstruktur (18b) der Lichtempfänger (26) angeordnet ist, wobei das vom Lichtsender (24) ausgehende Lichtbündel **durch** die eine kombinierte Fresnelstruktur (18a) parallel gerichtet wird, die Linsenplatte (12) senkrecht durchquert, **durch** die gegenüberliegende Fresnel-Reflektorstruktur (22a) schräg gegen die Scheibe gerichtet und von der Scheibe totalreflektiert wird und sodann **durch** die der anderen kombinierten Fresnelstruktur (16b) gegenüberliegenden Fresnel-Reflektorstruktur (22b) in die Linsenplatte (12) eingekoppelt und senkrecht **durch** die Linsenplatte (12) auf die andere kombinierte Fresnelstruktur (16b) gerichtet sowie **durch** diese auf den Lichtempfänger (26) gebündelt wird.

18. Optische Sensorvorrichtung nach Anspruch 17, **dadurch gekennzeichnet, daß** sie eine Anzahl von Sensoreinheiten aufweist, die eine gemeinsame Linsenplatte (12) haben.

19. Optische Sensorvorrichtung nach Anspruch 2 und einem der Ansprüche 3 bis 16, **dadurch gekennzeichnet, daß** ein unter einem engen Erfassungswinkel auf die Scheibe treffendes Lichtbündel diese schräg durchquert und sodann durch die der Scheibe gegenüberliegende Fresnel-Reflektorstruktur (22) in die Linsenplatte (12) eingekoppelt und senkrecht durch die Linsenplatte (12) auf die kombinierte Fresnelstruktur (16) gerichtet sowie durch diese auf den Lichtempfänger (26) gebündelt wird.

20. Regen/Licht-Sensor, **gekennzeichnet durch** eine optische Sensorvorrichtung nach Anspruch 17 oder 18 kombiniert mit einer optischen Sensorvorrichtung nach Anspruch 19, wobei die Sensorvorrichtungen eine gemeinsamen Linsenplatte (12) haben.

## Claims

1. An optical sensor device which is adapted to be coupled to a pane, in particular to a windshield (10) of a motor vehicle, comprising a sensor unit which includes a light emitter (24), a light receiver (26), and a lens plate (12) that is used for coupling a pencil of rays radiated by the light emitter (24) into and out of the pane and directing it onto the light receiver (26), **characterized in that** the lens plate (12) includes a combined Fresnel structure (16a, 16b) having a Fresnel lens structure (18a, 18b) and a Fresnel reflector structure (20a, 20b) on a first surface (12a) facing the light emitter (24) and the light receiver (26), and a Fresnel reflector structure (22a, 22b) on an opposite, second surface (12b) facing the pane.

2. An optical sensor device which is adapted to be coupled to a pane, in particular to a windshield (10) of a motor vehicle, comprising a sensor unit which includes a light receiver (26) and a lens plate (12) that is used for coupling a pencil of rays incident on the pane out of the pane and directing it onto the light receiver (26), **characterized in that** the lens plate (12) includes a combined Fresnel structure (16) having a Fresnel lens structure and a Fresnel reflector structure on a first surface (12a) facing the light receiver (26), and a Fresnel reflector structure (22) on an opposite, second surface (12b) facing the pane.

3. The optical sensor device according to claim 1, **characterized in that** the combined Fresnel structure (16a) of the first surface (12a) reshapes a diverging pencil of rays into a parallel pencil of rays.

4. The optical sensor device according to any of the preceding claims, **characterized in that** the combined Fresnel structure (16a, 16b; 16) of the first surface (12a) reshapes a parallel pencil of rays coupled out of the pane and traversing the lens plate (12) into a converging pencil of rays.

5. The optical sensor device according to claim 3 or 4, **characterized in that** the parallel pencil of rays traverses the lens plate (12) perpendicularly.

6. The optical sensor device according to any of the preceding claims, **characterized in that** the combined Fresnel structure (16a, 16b; 16) of the first surface is a rotationally symmetrical structure for focusing a diverging or parallel pencil of rays.

7. The optical sensor device according to claim 6, **characterized in that** the Fresnel reflector structure (20a, 20b) of the combined Fresnel structure (16a, 16b; 16) has a larger radial distance from the axis (A, B) of rotational symmetry than the Fresnel lens structure (18a, 18b) of the combined Fresnel structure (16a, 16b; 16).

8. The optical sensor device according to any of the preceding claims, **characterized in that** the Fresnel reflector structure (22a, 22b; 22) of the second surface (12b) is a linear structure for deflecting a parallel pencil of rays into a specific direction.

9. The optical sensor device according to any of the preceding claims, **characterized in that** the lens plate (12) is coupled to the pane by a coupler layer (14) that is in form-fitting contact with the Fresnel reflector structure (22a, 22b; 22) of the second surface (12b).

10. The optical sensor device according to any of the preceding claims, **characterized in that** the Fresnel reflector structure (22a, 22b; 22) of the second surface (12b) reflects at internal surfaces.

11. The optical sensor device according to any of the preceding claims, **characterized in that** the Fresnel reflector structure (22a, 22b; 22) of the second surface (12b) is generally sawtooth-shaped in cross-section, having first flanks (22₁), at which the reflection occurs, and second flanks (22₂, 22₃), at which a parallel pencil of rays enters or exits.

12. The optical sensor device according to claim 11, **characterized in that** the second flanks (22₂, 22₃) are traversed perpendicularly.

13. The optical sensor device according to claim 11, **characterized in that** a refraction of light is effected at the second flanks (22₂, 22₃).

14. The optical sensor device according to claim 12 or 13, **characterized in that** the second flanks have two sections (22₂, 22₃) of different steepness, the less steep sections (22₂) forming the entry and exit surfaces.

15. The optical sensor device according to claim 13, **characterized in that** the second flanks (22₂, 22₃) form entry and exit surfaces, respectively, which are steeper than the first flanks.

16. The optical sensor device according to any of claims 11 to 13, **characterized in that** the first and second flanks (22₁ and 22₂, 22₃, respectively) are made to be substantially symmetrical in relation to each other.

17. The optical sensor device according to claim 1 and any of claims 3 to 16, **characterized by** at least one sensor unit for which there are formed in the lens plate (12) two separate, combined Fresnel structures (16a, 16b), adjacent to each other, including a Fresnel lens structure (18a, 18b) and a Fresnel reflector structure (20a, 20b), with oppositely located Fresnel reflector structures (22a, 22b), and the light emitter (24) is arranged in the focal point of one Fresnel lens structure (18a) and the light receiver (26) is arranged in the focal point of the other Fresnel lens structure (18b), the pencil of rays emitted by the light emitter (24) being collimated by the one combined Fresnel structure (18a), passing perpendicularly through the lens plate (12), being directed against the pane at an angle by the opposite Fresnel reflector structure (22a) and totally reflected by the pane, and then being coupled into the lens plate (12) by the Fresnel reflector structure (22b) opposite to the other combined Fresnel structure (16b) and being directed perpendicularly through the lens plate (12) onto the other combined Fresnel structure (16b) and focused onto the light receiver (26) by the latter.

18. The optical sensor device according to claim 17, **characterized in that** it includes a number of sensor units which have a shared lens plate (12).

19. The optical sensor device according to claim 2 and any of claims 3 to 16, **characterized in that** a pencil of rays incident on the pane at a narrow angle of detection traverses the pane at an angle and is then coupled into the lens plate (12) by the Fresnel reflector structure (22) opposite to the pane and directed perpendicularly through the lens plate (12) onto the combined Fresnel structure (16) and focused onto the light receiver (26) by the latter.

20. A rain/light sensor, **characterized by** an optical sensor device according to claim 17 or 18 combined with an optical sensor device according to claim 19, the sensor devices having a shared lens plate (12).

## Revendications

1. Dispositif de capteur optique apte à être couplé à une vitre, en particulier à un pare-brise (10) d'un véhicule automobile, comportant une unité de capteur qui présente un émetteur de lumière (24), un récepteur de lumière (26) et une plaque lentille (12) au moyen de laquelle un faisceau lumineux émis par l'émetteur de lumière (24) est couplé dans la vitre et hors de la vitre et est dirigé sur le récepteur de lumière (26), **caractérisé en ce que** la plaque lentille (12) présente sur une première surface (12a) qui est tournée vers l'émetteur de lumière (24) et le récepteur de lumière (26), une structure de Fresnel combinée (16a, 16b) avec une structure de lentille de Fresnel (18a, 18b) et une structure de réflecteur de Fresnel (20a, 20b), et sur une deuxième surface (12b) opposée qui est tournée vers la vitre, une structure de réflecteur de Fresnel (22a, 22b).

2. Dispositif de capteur optique apte à être couplé à une vitre, en particulier à un pare-brise (10) d'un véhicule automobile, comportant une unité de capteur qui présente un récepteur de lumière (26) et une plaque lentille (12) au moyen de laquelle un faisceau lumineux incident sur la vitre est couplé hors de la vitre et est dirigé sur le récepteur de lumière (26), **caractérisé en ce que** la plaque lentille (12) présente sur une première surface (12a) qui est tournée vers le récepteur de lumière (26), une structure de Fresnel combinée (16) avec une structure de lentille de Fresnel et une structure de réflecteur de Fresnel, et sur une deuxième surface (12b) opposée qui est tournée vers la vitre, une structure de réflecteur de Fresnel (22).

3. Dispositif de capteur optique selon la revendication 1, **caractérisé en ce que** la structure de Fresnel combinée (16a) de la première surface (12a) transforme un faisceau lumineux divergent en un faisceau lumineux parallèle.

4. Dispositif de capteur optique selon l'une des revendications précédentes, **caractérisé en ce que** la structure de Fresnel combinée (16, 16b ; 16) de la première surface (12a) transforme un faisceau lumineux parallèle couplé hors de la vitre et traversant la plaque lentille (12) en un faisceau lumineux convergent.

5. Dispositif de capteur optique selon la revendication 3 ou 4, **caractérisé en ce que** le faisceau lumineux parallèle traverse la plaque lentille (12) de manière perpendiculaire.

6. Dispositif de capteur optique selon l'une des revendications précédentes, **caractérisé en ce que** la structure de Fresnel combinée (16a, 16b; 16) de la première surface est une structure à symétrie de révolution pour la focalisation d'un faisceau lumineux divergent ou parallèle.

7. Dispositif de capteur optique selon la revendication 6, **caractérisé en ce que** la structure de réflecteur de Fresnel (20a, 20b) de la structure de Fresnel combinée (16a, 16b ; 16) présente une plus grande distance radiale de l'axe de symétrie de révolution (A, B) que la structure de lentille de Fresnel (18a, 18b) de la structure de Fresnel combinée (16a, 16b ; 16).

8. Dispositif de capteur optique selon l'une des revendications précédentes, **caractérisé en ce que** la structure de réflecteur de Fresnel (22a, 22b ; 22) de la deuxième surface (12b) est une structure linéaire pour la déviation d'un faisceau lumineux parallèle dans une direction déterminée.

9. Dispositif de capteur optique selon l'une des revendications précédentes, **caractérisé en ce que** la plaque lentille (12) est couplée à la vitre au moyen d'une couche de coupleur (14) en appui sur la structure de réflecteur de Fresnel (22a, 22b ; 22) de la deuxième surface (12b) par coopération de formes.

10. Dispositif de capteur optique selon l'une des revendications précédentes, **caractérisé en ce que** la structure de réflecteur de Fresnel (22a, 22b ; 22) de la deuxième surface (12b) reflète sur des surfaces intérieures.

11. Dispositif de capteur optique selon l'une des revendications précédentes, **caractérisé en ce que** la structure de réflecteur de Fresnel (22a, 22b ; 22) de la deuxième surface (12b) présente en section transversale une forme générale en dents de scie comportant des premiers flancs (22₁) sur lesquels la réflexion survient, et des deuxièmes flancs (22₂, 22₃) sur lesquels un faisceau lumineux parallèle entre ou sort.

12. Dispositif de capteur optique selon la revendication 11, **caractérisé en ce que** les deuxièmes flancs (22₂, 22₃) sont traversés de manière perpendiculaire.

13. Dispositif de capteur optique selon la revendication 11, **caractérisé en ce qu'**une réfraction est réalisée au niveau des deuxièmes flancs (22₂, 22₃).

14. Dispositif de capteur optique selon la revendication 12 ou 13, **caractérisé en ce que** les deuxièmes flancs comportent deux tronçons (22₂, 22₃) qui présentent des pentes différentes, dont ceux qui présentent une pente moins raide (22₂) forment les surfaces d'entrée et de sortie.

15. Dispositif de capteur optique selon la revendication 13, **caractérisé en ce que** les deuxièmes flancs (22₂, 22₃) forment des surfaces d'entrée et de sortie qui sont plus raides que les premiers flancs.

16. Dispositif de capteur optique selon l'une des revendications 11 à 13, **caractérisé en ce que** les premiers et les deuxièmes flancs (22₁ ou 22₂, 22₃) sont réalisés sensiblement symétriques les uns par rapport aux autres.

17. Dispositif de capteur optique selon la revendication 1 et l'une des revendications 3 à 16, **caractérisé par** au moins une unité de capteur pour laquelle sont agencées dans la plaque lentille (12) deux structures de Fresnel combinées (16a, 16b) séparées et adjacentes l'une à l'autre, lesquelles présentent une structure de lentille de Fresnel (18a, 18b) et une structure de réflecteur de Fresnel (20a, 20b) avec des structures de réflecteur de Fresnel opposées (22a, 22b), et l'émetteur de lumière (24) est agencé dans le foyer de l'une des structures de lentille de Fresnel (18a) et le récepteur de lumière (26) est agencé dans le foyer de l'autre structure de lentille de Fresnel (18b), le faisceau lumineux émis par l'émetteur de lumière (24) étant dirigé de manière parallèle par l'une des structures de Fresnel combinées (18a), traversant la plaque lentille (12) de manière perpendiculaire, étant dirigé en oblique contre la vitre par la structure de réflecteur de Fresnel opposée (22a) et étant totalement réfléchi par la vitre, et étant ensuite couplé dans la plaque lentille (12) par la structure de réflecteur de Fresnel (22b) opposée à l'autre structure de Fresnel combinée (16b), étant dirigé perpendiculairement à travers la plaque lentille (12) sur l'autre structure de Fresnel combinée (16b), et étant focalisé par celle-ci sur le récepteur de lumière (26).

18. Dispositif de capteur optique selon la revendication 17, **caractérisé en ce qu'**il présente un nombre d'unités de capteur qui ont une plaque lentille (12) commune.

19. Dispositif de capteur optique selon la revendication 2 et l'une des revendications 3 à 16, **caractérisé en ce qu'**un faisceau lumineux incident sur la vitre sous un angle de détection étroit la traverse de manière oblique et est ensuite couplé dans la plaque lentille (12) par la structure de réflecteur de Fresnel (22) opposée à la vitre, est dirigé perpendiculairement à travers la plaque lentille (12) sur la structure de Fresnel combinée (16), et est focalisé par celle-ci sur le récepteur de lumière (26).

20. Capteur de pluie/de lumière, **caractérisé par** un dispositif de capteur optique selon la revendication 17 ou 18 en combinaison avec un dispositif de capteur optique selon la revendication 19, les dispositifs de capteur optique présentant une plaque lentille commune (12).
